# EUROPÄISCHE PATENTSCHRIFT

(11) **EP 0 554 664 B1**
(45) Veröffentlichungstag und Bekanntmachung des Hinweises auf die Patenterteilung: **06.12.1995**
(21) Anmeldenummer: 93100228.1
(22) Anmeldetag: 08.01.1993
(51) Int. Cl.: B65B 9/02, B65B 35/10, B65B 51/28

(54) **Vorrichtung zum Zuführen und Versiegeln flacher Gegenstände**
Apparatus for feeding and sealing flat objects
Dispositif pour alimenter et sceller des objets plats

(30) Priorität: 06.02.1992 DE 4203435
(43) Veröffentlichungstag der Anmeldung: 11.08.1993
(73) Patentinhaber: PVT Piepenbrock Verpackungstechnik GmbH, 49084 Osnabrück (DE)
(72) Erfinder: Gries, Manfred, W-7500 Karlsruhe (DE); Klein, Roland, W-7537 Remchingen-Darmsbach (DE)
(74) Vertreter: Lehmann, Klaus, Dipl.-Ing.

(56) Entgegenhaltungen:
- CH-A- 356 074
- DE-C- 958 998
- FR-A- 1 230 705
- FR-A- 1 507 238
- US-A- 4 244 158

## Beschreibung

Die Erfindung bezieht sich auf eine Vorrichtung zum Zuführen und Versiegeln flacher Gegenstände entsprechend dem Oberbegriff des Anspruchs 1.

In Verpackungsmaschinen werden die Gegenstände, z.B. Tabletten nach dem Verlassen der Tablettenpresse, über Förder- und Zuführeinrichtungen einer Versiegelungsstation zugeführt. Hier werden sie einzeln zwischen Endlosstreifen von Heißsiegelfolie eingesiegelt. Danach werden die Folienstreifen mit den darin eingesiegelten Tabletten zum Trennen (Längs- und Querschneiden) in kleine Verpackungseinheiten und zum anschließenden Stapeln und Kartonieren befördert.

Bei bekannten Verpackungsmaschinen werden die einzelnen Gegenstände, z.B. Tabletten von der Tablettenpresse kommend, in mehreren Bahnen nebeneinander schräg nach oben, dicht hintereinander und aneinander liegend zur Versiegelungsstation gefördert. Nach Passieren einer Umlenkeinrichtung und Freigabe durch eine Fingerwalze läßt man die Tabletten in freiem Fall lotrecht zwischen zwei Heißsiegelwerkzeuge hineinfallen, über die von beiden Seiten her je eine Heißsiegelfolie zugeführt wird. Zwischen diesen Folien werden die Tabletten eingesiegelt.

Die einzelnen Tabletten reihen sich nach dem Passieren der Umlenkeinrichtung im lotrechten Stau vor der Fingerwalze auf, deren Finger seitlich in die Zwischenräume zwischen zwei in der Reihe benachbart aneinander anliegenden Tabletten eingreifen. Durch die Rotation der Walze werden aus dem lotrecht im Stau liegenden Tablettenstapel jeweils einzelne Tabletten zum freien Fall freigegeben. Die Freigabe muß so gesteuert werden, daß die Tabletten jeweils genau in den Bereich zwischen zwei Formvertiefungen (Siegelhöfe) der beiden Heißsiegelwerkzeuge hineinfallen, so daß sie zwischen den beiden über die Werkzeuge von außen zugeführten Folien einzeln eingesiegelt werden können.

Die Fallgeschwindigkeit der Tabletten hängt primär von der Schwerkraft ab, sekundär auch von der Masse und der Form der Tabletten (Luftwiderstand beim Fall). Die Umlaufgeschwindigkeit der Siegelwalzen und damit die Fördergeschwindigkeit der beiden Siegelfolien muß demnach an die Fallgeschwindigkeit der Tabletten angepaßt werden. Der Takt der Freigabe der Tabletten muß über die Umlaufgeschwindigkeit dar Fingerwalze mit der Umlaufgeschwindigkeit der Siegelwalzen synchronisiert sein. Bei nur geringfügigen Änderungen der Sollgeschwindigkeit einer dieser Komponeneten besteht die Gefahr, daß die Tabletten zu früh oder zu spät zwischen die Folien und damit nicht genau in die Mitte der Formvertiefungen gelangen. Es würden dann unbrauchbare Packungen entstehen, oder zumindest könnten sich die Tabletten mit ihren Kanten an den Rändern der Siegelpackung durchdrücken oder abzeichnen. In dem Extremfall, daß die Fingerwalze und die Heißsiegelwalzen vollkommen phasenversetzt laufen, würden die Tabletten nicht in die Formvertiefungen, sondern zwischen die Siegelbereiche der Siegelwalzen fallen und damit von diesen zerdrückt werden.

Nach dem Versiegeln und dem Längs- und Querschneiden der Folienstreifen werden die Tabletten aus der lotrechten Führungsbahn erneut, und zwar um mehr als 90 Grad, in eine schräg nach oben verlaufende Bahn zum anschließenden Stapeln und Kartonieren umgelenkt. Die Tabletten erfahren also zwischen der Tablettenpresse und der Kartonverpackung mehrere Umlenkungen, teilweise mit, teilweise ohne Siegelhülle, wodurch Abrieb und Bruch entstehen können.

Außerdem müssen bei den bekannten Maschinen die Tabletten von der vorgegebenen Auslaßhöhe der Tablettenpresse (ca. 900 mm) durch schräg nach oben verlaufende Fördereinrichtungen bis zur Fingerwalze zur Positionierung für den freien Fall angehoben werden. Nach dem Einsiegeln werden die Tabletten in den Folienstreifen durch schräg nach oben verlaufende Fördereinrichtungen auf die vorgegebene Höhe der Maschine für das weitere Verpacken angehoben. Dieses zweimalige Anheben der Tabletten bedingt eine große Baulänge und -höhe der gesamten Anlage.

Aufgabe der Erfindung ist es also, eine genaue Positionierung der Tabletten in den Siegelpackungen zu erzielen, wobei die Förderung der Tabletten möglichst schonend erfolgen soll. Die Baulänge und -höhe der Maschine soll darüberhinaus möglichst gering sein. Durch die Erfindung nach Anspruch 1 werden die oben beschriebenen Probleme gelöst:

Mittels zweier sogenannter Polygonwalzen zwischen Fingerwalze und Heißsiegelwalzen werden die Tabletten exakt positioniert und den Heißsiegelwalzen zugeführt. Die Finger-, Polygon- und Heißsiegelwalzen sind derart hintereinander angeordnet, daß Zuführung, Positionierung, Vereinzelung, Versiegelung und Abtransport der Tabletten in einer horizontalen Ebene stattfinden. Durch die Formgeometrie der Polygonwalzen wird eine Zwangsführung und damit eine sichere Positionierung der Tabletten in den Siegelhöfen unabhängig von der Fallbeschleunigung und der Masse der Tabletten erzielt. Darüberhinaus wird ein mehrfaches Umlenken der Tabletten vermieden und damit die Belastung der Tabletten zwischen Tablettenpresse und Kartonierung minimiert, wodurch gleichzeitig eine geringere Baugröße der Gesamtmaschine erreicht wird.

Die erfindungsgemäße Zuführvorrichtung ist allgemein geeignet für im wesentlichen flache, abgerundete, scheibenförmige Gegenstände, insbesondere jedoch für Tabletten.

Ein Ausführungsbeispiel der Erfindung wird im folgenden anhand der schematischen Zeichnungen im einzelnen beschrieben:
- Fig. 1: ist ein Längsschnitt durch eine erfindungsgemäße Zuführ- und Versiegelungsvorrichtung mit Fingerwalze, Polygonwalzen und Heißsiegelwalzen in einer ersten Stellung;
- Fig. 2: ist ein Längsschnitt durch die gleiche Vorrichtung in einer zweiten Stellung;
- Fig. 3: ist eine Draufsicht auf eine Polygonwalze für eine zweibahnige Tablettenzuführung.

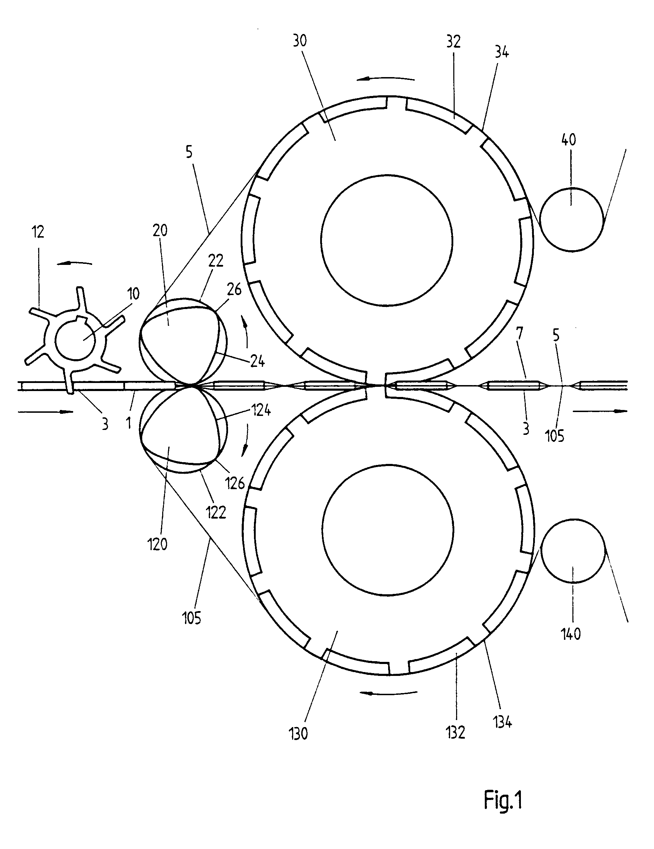

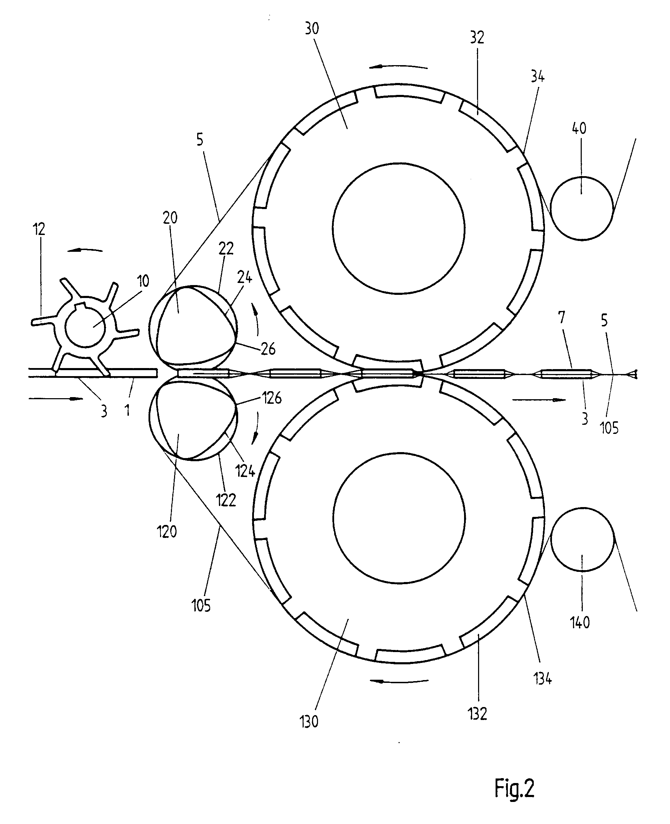

In der Zuführ- und Versiegelungsvorrichtung sind ober- bzw. unterhalb einer horizontalen Förderbahn 3 für Tabletten 1 im wesentlichen eine Fingerwalze 10, zwei Polygonwalzen 20, 120 und zwei Heißsiegelwalzen 30, 130 hintereinander angeordnet (Fig. 1 und 2). Die von der Tablettenpresse kommenden Tabletten 1 durchlaufen die Zuführ- und Versiegelungsvorrichtung, indem sie auf der Förderbahn 3 mittels der Fingerwalze 10 und der beiden Polygonwalzen 20, 120 den beiden Heißsiegelwalzen 30, 130 zugeführt werden.

Die Fingerwalze 10 weist Finger 12 auf, die am Umfang der Walze vorragend, unter gleichen Winkeln geneigt und mit gleicher Länge angeordnet sind. Sie dienen zum Eingriff zwischen den hintereinander und aneinander anliegenden Tabletten 1, wobei die Finger 12 axial so angeordnet sind, daß je zwei Finger eine Tablette ergreifen. Die Polygonwalzen 20, 120 haben einen polygonalen Querschnitt und vorzugsweise einen abgerundeten Dreiecksquerschnitt (Fig. 1 bis 3). Außerdem haben sie koaxiale zylindrische Folienführungsbereiche 22, 122, die die Tablettenfreiräume 24, 124 auf den Polygonwalzen 20, 120 begrenzen. Die Heißsiegelwalzen 30, 130 weisen Vertiefungen, die sogenannten Siegelhöfe 32, 132, auf, in denen die Tabletten 1 aufgenommen werden, während Heißsiegelfolie 5, die von oben über Führungseinrichtungen 40 zugeführt wird, mit Heißsiegelfolie 105, die von unten über Führungseinrichtungen 140 zugeführt wird, durch die Siegelbereiche 34, 134 versiegelt wird.

Die Fingerwalze 10 dient zum Positionieren der Tabletten 1 im Stau, der z. B. durch ein vor der Fingerwalze 10 angeordnetes Förderband erzeugt wird. Dabei greift je ein Finger 12 der Fingerwalze 10 in den durch die runde Form der Tabletten erzeugten Freiraum seitlich zwischen den aneinander anliegenden Tabletten 1 ein und positioniert die dahinter im Stau liegenden Tabletten bis zum Erfassen durch die Heißsiegelfolien 5, 105 im Einzugsbereich der Polygonwalzen 20, 120, durch die die Tabletten mit der Packungslänge entsprechender höherer Umfangsgeschwindigkeit vereinzelt und transportiert werden. Die so vereinzelten Tabletten 1 werden daher mit höherer Geschwindigkeit zwischen den beiden übereinander angeordneten, aneinander anliegenden Polygonwalzen 20, 120 hindurchgeführt, die vor den beiden ebenfalls übereinander angeordneten, aneinander anliegenden Heißsiegelwalzen 30, 130 zwischengeschaltet sind. Die Achsen aller rotierenden Teile (Fingerwalze 10, Polygonwalzen 20, 120, Heißsiegelwalzen 30, 130) liegen parallel zueinander, parallel zur Förderebene und rechtwinklig zur Förderbahn 3 der Tabletten 1.

Über die äußeren Oberflächen der Heißsiegelwalzen 30, 130 wird jeweils ein Endlosstreifen von Heißsiegelfolie 5, 105 zugeführt und gelangt zunächst auf die äußeren Oberflächen der Polygonwalzen 20, 120. Die Folien 5, 105 werden über die Polygonwalzen 20, 120 zwischen diese in die Förderbahn 3 in Förderrichtung umgelenkt. Durch die Fingerwalze 10 werden die im Stau positionierten Tabletten 1 zwischen die Folien 5, 105 zwischen den Polygonwalzen 20, 120 eingeschoben.

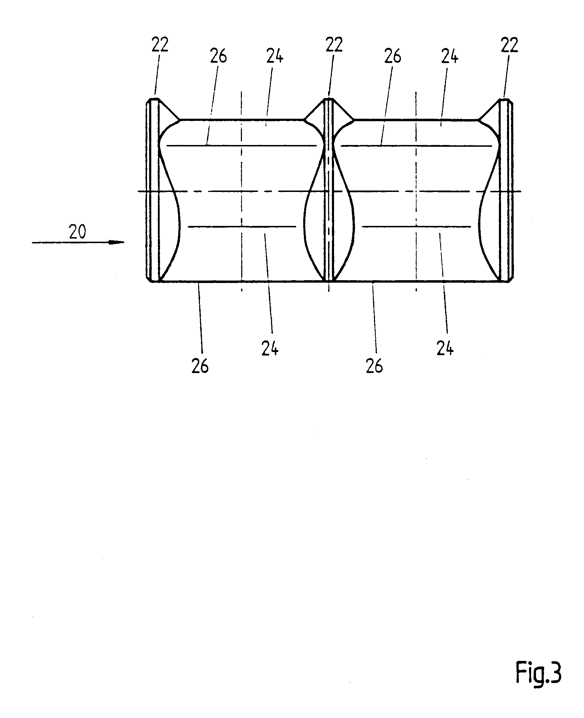

Zur Führung der Siegelfolien 5, 105 weist jede Polygonwalze 20, 120 mindestens zwei mit der Walze koaxiale zylindrische Führungsbereiche 22, 122 mit glatter Oberfläche auf, die eine seitliche Begrenzung der Tablettenfreiräume 24, 124 bilden. Bei einem Tablettenfreiraum 24, 124 hat die Walze 20, 120 also an jedem Ende einen zylindrischen Folienführungsbereich 22, 122; bei zwei Tablettenfreiräumen hat sie an jedem Ende sowie in der Mitte der Walze einen zylindrischen Folienführungsbereich (Fig. 3). Analog können auch mehrere Tablettenfreiräume 24, 124 nebeneinander vorgesehen sein. Die zwei Walzen 20, 120 berühren sich an diesen Folienführungsbereichen 22, 122, und daher werden die Heißsiegelfolien 5, 105 hier aneinander gedrückt, um aneinander zu haften, wodurch das nachfolgende Versiegeln vorbereitet wird. Die Siegelfolie 5, 105 wird darüber hinaus auf den radial außen liegenden Ecken bzw. Kanten 26, 126 der Polygonquerschnitte geführt. Somit ist insgesamt eine gleichmäßige Führung der Siegelfolien 5, 105 ohne Verzug über die Polygonwalzen 20, 120 gewährleistet. Die Förderung der Siegelfolien 5, 105 und damit der Zug auf sie erfolgt nur durch die Heißsiegelwalzen 30, 130, nicht durch die Polygonwalzen 20, 120, und zwar durch ein aufgerauhtes Profil dar Siegelbereiche 34, 134 der Heißsiegelwalzen 30, 130.

Die einzelnen Tabletten 1 werden in den Bereichen zwischen den Polygonwalzen 20, 120, wo diese verminderten Durchmesser haben, zwischen die Heißsiegelfolien 5, 105 eingeschnäbelt. Dadurch legen sich die Folienteile in die Abschnitte der Polygonwalzen 20, 120 mit kleinerem Durchmesser hinein, zur Vorbereitung des nachfolgenden Einlegens in die Siegelhöfe 32, 132 der Heißsiegelwalzen 30, 130.

Die Polygonwalzen 20, 120 haben im polygonalen Bereich vorzugsweise einen abgerundeten Dreiecksquerschnitt. Dadurch ergeben sich vorteilhafte Winkel für die Einschnäbelung der Tabletten 1, und vor allem sind kurze Abstände zwischen der Fingerwalze 10 und den Heißsiegelwalzen 30, 130 zu beiden Seiten der Polygonwalzen 20, 120 möglich. Denkbar sind aber auch Polygonwalzen 20, 120 mit mehreckigen, abgerundeten Querschnitten.

Durch den Zug auf die Heißsiegelfolien 5, 105 von den Heißsiegelwalzen 30, 130 wird die Tablette 1 mit den Folien 5, 105 durch die Polygonwalzen 20, 120 gezogen, synchron zu deren Rotation. Die Rotation der Polygonwalzen 20, 120 erfolgt derart, daß zwischen zwei im Abstand aufeinander folgenden Tabletten 1 die abgerundeten Ecken bzw. Kanten 26, 126 des Polygons einander berühren. Folglich berühren sich die zwei zwischen den Polygonwalzen 20, 120 verlaufenden Siegelfolien 5, 105 hier ebenfalls und bleiben aneinander haften, werden jedoch noch nicht miteinander versiegelt.

Die Abrundung der Kanten 26, 126 der Polygone in Umfangsrichtung ist zweckmäßig, um keine Druckstellen oder Einschnitte in der Folie 5, 105 zu bewirken. Eine Abrundung oder Abschrägung ist auch seitlich in axialer Richtung der Walze am Übergang von den Polygonbereichen der Freiräume 24, 124 zu den zylindrischen Führungsbereichen 22, 122 zweckmäßig, um die Folien 5, 105 nicht durch scharfe Kanten zu belasten oder gar zu verletzen.

Die über die nicht benutzten Seiten der heißen Heißsiegelwalzen 30, 130 zulaufenden Heißsiegelfolien 5, 105 werden von diesen vorerwärmt, bevor sie über die Polygonwalzen 20, 120 laufen, die dadurch selbst aufgewärmt werden. Die Erwärmung der Folien und der Polygonwalzen 20, 120 ermöglicht das Anheften der Folien 5, 105 aneinander. Durch diese Ansiegelung im Folienstrang mittels der Folienführungsbereiche 22, 122 und der Kanten 26, 126 der Polygonwalzen 20, 120 werden die Tabletten allseitig fixiert. Der eigentliche Siegelvorgang erfolgt jedoch erst zwischen den Heißsiegelwalzen 30, 130 in bekannter Weise durch das Aufeinandertreffen der auf dem Umfang der Walzen axial und in Umfangsrichtung verlaufenden Siegelbereiche 34, 134 zwischen den Siegelhöfen 32, 132.

Hinter den Heißsiegelwalzen 30, 130 werden die versiegelten Tabletten 1 in bekannter Weise weiter verarbeitet: Die nebeneinander liegenden Tablettenbahnen werden in formatgerechte Längs- und Querbahnen zerschnitten, um beispielsweise von einem Förderer zum Kartonieren weitergefördert zu werden.

Wesentlich für die erfindungsgemäße Zuführ- und Versiegelungsvorrichtung ist es, daß die Tabletten geschont werden, d.h. keiner Belastung unterworfen werden:
Die Finger-, Polygon- und Heißsiegelwalzen 10; 20, 120; 30, 130 sind derart hintereinander angeordnet, daß Zuführung, Positionierung, Vereinzelung, Versiegelung und Abtransport der Tabletten 1 in einer horizontalen Ebene auf der horizontalen Förderbahn 3 stattfinden. Dadurch wird ein harmonischer Durchlauf der losen und der versiegelten Tabletten 1, 7 durch die Versiegelungsvorrichtung bewerkstelligt. Es entfallen Förderungen der Tabletten nach oben und nach unten sowie Umlenkungen der Tabletten, oder es sind zumindest nur geringe Höhenunterschiede erforderlich. Der freie Fall als Zuführung zu den Heißsiegelwalzen wird eliminiert. Somit ergibt sich eine platzsparende Baugröße der gesamten Verpackungsmaschine. Der Ausgang aus der Tablettenpresse, die Zuführeinrichtung zu den Heißsiegelwalzen 30, 130, diese Walzen selbst sowie die anschließenden (bekannten) Verarbeitungseinrichtungen können im wesentlichen in einer horizontalen Ebene liegen. Auch die Fertigpackungen (Austrag) müssen nicht mehr umgelenkt werden. Sie haben bereits die richtige Höhenlage zu einem Weiterförderer und können daher einfacher gehandhabt werden. Insgesamt ist damit eine bessere Sichtkontrolle aller Funktionsgruppen der gesamten Anlage durch eine stehende Bedienungsperson möglich. Nicht zuletzt kann dadurch auch ein besseres optisches Design der Anlage erzielt werden.

Bei der bekannten Verpackungsart mit freiem Fall ergaben sich unterschiedliche Lagen der einzelnen Tabletten in den Siegelhöfen der Heißsiegelwalzen, abhängig von den Geschwindigkeiten der Walzen und von der Masse und der Fallbeschleunigung der Tabletten. Nach der Erfindung ergibt sich wegen der geometrischen Zwangssteuerung immer eine gleiche Lage der Tabletten innerhalb der Siegelräume 32, 132. Durch die Sychronisierung der Rotationen aller Walzen miteinander sind die Tabletten ständig zwangsgeführt und können nie eine eigene freie Bewegung ausführen: Die Fingerwalze 10 führt den Polygonwalzen 20, 120 jeweils eine Tablette 1 zu, immer passend zu deren Momentanstellung. Durch sie wird die Tablette 1 zwischen den Siegelfolienbahnen 5, 105 vorpositioniert. Damit wird eine exakte Lage in den Siegelhöfen 32, 132 der Heißsiegelwalzen 30, 130 erzielt. Die Gefahr von unbrauchbaren Packungen, sei es durch schlecht in den Siegelhöfen 32, 132 positionierte oder durch von den Siegelbereichen 34, 134 zwischen den Siegelhöfen 32, 132 zerdrückte Tabletten 1, wird somit minimiert.

Ein Aufheizen der Tabletten bei Stillstand der Maschine oder im laufenden Betrieb wird vermieden, da die Zuführung der Tabletten nicht von oben entgegen dem aufsteigenden Wärmestrom erfolgt. Durch die horizontale Zuführung bleiben die Tabletten auch bei Stillsetzung der Maschine kühl. Auch die Zuführungsteile der Maschine vor der Versiegelung werden nicht mehr aufgeheizt. Außerdem können Staub und Abrieb von den Tabletten sowie verdampfende Folienbeschichtung, die mit dem Warmluftstrom aufsteigen, keine oben liegenden Maschinenteile mehr verunreinigen. Ein Verharzen oder Verkleben solcher Teile ist damit ausgeschlossen. Dadurch werden Reinigungsarbeiten an den Zuführungsteilen eingespart. Insgesamt kann somit die Arbeitskapazität der Maschine besser ausgenutzt werden, da technisch bedingte Stillstandzeiten vermindert werden.

Durch die Wärme der beheizten Heißsiegelwalzen 30, 130 werden über die umlaufenden Heißsiegelfolien 5, 105 auch die Polygonwalzen 20, 120 aufgeheizt, die selbst nicht beheizt werden. Somit werden die Folien 5, 105 mit ihrem erwärmten Siegelklebstoff im Bereich der zylindrischen Folienführungsbereiche 22, 122 und der abgerundeten Kanten 26, 126 der Polygonwalzen 20, 120 kontaktiert, wodurch das Anhaften der Folien 5, 105 aneinander zwischen den Polygonwalzen 20, 120 erzielt wird. Es erfolgt also kein Wärmeverlust, die vorhandene Wärmeleistung wird effektiver als bisher genutzt.

Ein weiterer Vorteil der Erfindung ist es, daß sich aufgrund der geometrischen Zwangssteuerung der Tablettenzuführung und der Folienzuführung durch die Polygonwalzen 20, 120 hohe Leistungen erreichen lassen, die bei laufender Maschine kontinuierlich stufenlos verändert werden können. Beispielsweise ist die Leistung zwischen 120 und 500 Takten pro Minute variabel einstellbar. Dabei haben die Tabletten immer die gleiche Positionslage, ein Nachjustieren ist nicht notwendig. Aus jeder Reihe einer mehrreihigen Maschine lassen sich also bis zu 500 Tabletten pro Minute in verpacktem Zustand gewinnen. Wegen dieser variablen Geschwindigkeitssteuerung während des laufenden Betriebs ist eine Anpassung an Geschwindigkeitsvariationen in der Tablettenzuführung und/oder der Tablettenabarbeitung bis zur Kartonierung möglich. Insgesamt wird damit ein höherer Wirkungsgrad und eine höhere Leistung erreicht.

## Patentansprüche

1. Vorrichtung zum Zuführen von flachen scheibenförmigen Gegenständen, wie pharmazeutischen Komprimaten und ähnlich gearteten Kleinteilen (1), und zum Versiegeln der Gegenstände in Heißsiegelfolien (5, 105), mit folgenden Merkmalen:
- Fördereinrichtungen zum Zuführen der flachliegenden Gegenstände dicht hintereinander aneinander anliegend auf nebeneinander angeordneten Förderbahnen (3);
- Heißsiegelwalzen (30, 130), die parallel zueinander und aneinander anliegend, mit ihren Achsen rechtwinklig zu den Förderbahnen (3) der Gegenstände angeordnet sind, wobei je eine Walze (30, 130) oberhalb und unterhalb der Förderbahnen (3) angeordnet ist, und wobei über jede Walze (30, 130) von außen her Heißsiegelfolie (5, 105) zuführbar ist, so daß die Walzen (30, 130) zwischen sich in Vertiefungen (32, 132) die Gegenstände zwischen Heißsiegelfolien (5, 105) aufnehmen und darin versiegeln;
- eine an der Förderbahn (3) vor den Heißsiegelwalzen (30, 130) angeordnete Fingerwalze (10) zum Positionieren der Gegenstände, wobei die Achse der Fingerwalze (10) parallel zur Achse der Heißsiegelwalzen (30, 130) liegt;
**gekennzeichnet** durch folgende Merkmale:
- Walzen (20, 120) mit Polygonquerschnitt zur geometrischen Zwangszuführung, Positionierung und Vereinzelung der Gegenstände, wobei die Polygonwalzen (20, 120) aneinander anliegen und eine von ihnen jeweils oberhalb und unterhalb der Förderbahnen (3) hinter der Fingerwalze (10) und vor den Heißsiegelwalzen (30, 130) so angeordnet ist, daß die Achsen aller Walzen (10, 20, 120, 30, 130) parallel liegen;
- die Fördereinrichtungen, die Fingerwalze (10), die Polygonwalzen (20, 120) und die Heißsiegelwalzen (30, 130) sind derart hintereinander angeordnet, daß das Zuführen, das Positionieren, das Vereinzeln, das Versiegeln und der Abtransport der Gegenstände entlang einer gemeinsamen horizontalen Ebene (3) stattfinden.

2. Vorrichtung nach Anspruch 1, dadurch **gekennzeichnet**, daß der Querschnitt der Polygonwalzen (20, 120) im wesentlichen die Form eines Dreiecks hat.

3. Vorrichtung nach Anspruch 1 oder 2, dadurch **gekennzeichnet**, daß der Querschnitt der Polygonwalzen (20, 120) an den Ecken (26, 126) und an den Seitenflächen abgerundet ist.

4. Vorrichtung nach Anspruch 1, dadurch **gekennzeichnet**, daß die Polygonwalzen (20, 120) auf ihren äußeren Oberflächen Heißsiegelfolien (5, 105) aufnehmen, die von den äußeren Oberflächen der Heißsiegelwalzen (30, 130) zugeführt werden, und daß sie die Heißsiegelfolien (5, 105) in die Förderbahn (3) in Förderrichtung zwischen die Polygonwalzen (20, 120) und die Heißsiegelwalzen (30, 130) umlenken.

5. Vorrichtung nach Anspruch 4, dadurch **gekennzeichnet**, daß an jeder der Polygonwalzen (20, 120) mindestens zwei koaxiale zylindrische Führungsbereiche (22, 122) für die Heißsiegelfolien (5, 105) vorgesehen sind, die seitliche Begrenzungen für Gegenstandsfreiräume (24, 124) auf den Polygonwalzen (20, 120) bilden.

6. Vorrichtung nach Anspruch 5, dadurch **gekennzeichnet**, daß die zylindrischen Folienführungsbereiche (22, 122) über abgeschrägte oder abgerundete Flächen in den Polygonbereich übergehen.

7. Vorrichtung nach einem der vorhergehenden Ansprüche, dadurch **gekennzeichnet**, daß das Produkt durch Ansiegelung im Folienstrang mittels der Polygonwalzen (20, 120) allseitig fixiert ist.

## Claims

1. Apparatus for supplying flat disc-like articles, such as pharmaceutical compacts and similarly configured small components (1), and for sealing the articles in hot-sealing sheets (5, 105) having the following features:
- conveying means for supplying the flatly lying articles in close succession bearing on each other to adjacently disposed conveying paths (3);
- hot-sealing rollers (33, 130), which are arranged parallel to each other and bearing on each other with their axes perpendicular to the conveying paths (3) of the articles, one roller (30, 130) being arranged above arid one below the conveying paths (3) , and via each roller (30, 130) from the outside hot-sealing sheet (5, 105) can be supplied so that the rollers (30, 130) receive the articles between them in depressions (32, 132) between hot-sealing sheets (5, 105) and seal said articles therein,
- a finger roller (10) arranged at the conveying path (3) in front of the hot-sealing rollers (30, 130) for positioning the articles, the axis of the finger roller (10) lying parallel to the axis of the hot-sealing rollers (30, 130);
characterized by the following features:
- rollers (20, 120) with polygonal cross-section for geometrical constrained guiding, positioning and separating of the articles, the polygonal rollers (20, 120) bearing on each other and one of them being arranged above and one of them being arranged below the conveying paths (3) behind the finger roller (10) and in front of the hot-sealing rollers (30, 130) in such a manner that the axes of all the rollers (10, 20, 120, 30, 130) lie parallel;
- the conveying means, the finger roller (10), the polygonal rollers (20, 120) and the hot-sealing rollers (30, 130) are arranged one behind the other in such a manner that the supplying, positioning, separating, sealing and carrying away of the articles take place along a common horizontal plane (3).

2. Apparatus according to claim 1, characterized in that the cross-section of the polygonal rollers (20, 120) has substantially the form of a triangle.

3. Apparatus according to claim 1 or 2, characterized in that the cross-section of the polygonal rollers (20, 120) is rounded at the corners (26, 126) and at the side faces.

4. Apparatus according to claim 1, characterized in that the polygonal rollers (20, 120) receive at their outer surfaces hot-sealing sheets or foils (5, 105) which are supplied from the outer surfaces of the hot-sealing rollers (30, 130) and that they deflect the hot-sealing sheets (5, 105) into the conveying path (3) in the conveying direction between the polygonal rollers (20, 120) and the hot-sealing rollers (30, 130).

5. Apparatus according to claim 4, characterized in that at each of the polygonal rollers (20, 120) at least two coaxial cylindrical guide regions (22, 122) for the hot-sealing foils (5, 105) are provided which form lateral boundaries for article cavities (24, 124) on the polygonal rollers (20, 120).

6. Apparatus according to claim 5, characterized in that the cylindrical sheet guide regions (22, 122) merge via bevelled or rounded surfaces into the polygonal region.

7. Apparatus according to any one of the preceding claims, characterized in that the product is fixed all round by initial sealing in the sheet web by means of the polygonal rollers (20, 120).

## Revendications

1. Dispositif pour alimenter des objets plats en forme de disque, tels que comprimés pharmaceutiques ou petites pièces semblables (1) et pour sceller les objets dans des films de scellement à chaud (5, 105) présentant les caractéristiques suivantes :
- dispositifs de transport pour alimenter des objets posés à plat l'un derrière l'autre en succession dense et se touchant réciproquement sur des bandes transporteuses (3) disposées l'une à côté de l'autre;
- des rouleaux de scellement à chaud (30, 130) qui sont disposés en parallèle et en se touchant réciproquement avec leurs axes orientés à angle droit par rapport aux bandes transporteuses (3) des objets, un rouleau (30, 130) étant disposé au-dessus et un au-dessous des bandes transporteuses (3) et un film de scellement à chaud (5, 105) pouvant être amené par dessus chaque rouleau (30, 130) de l'extérieur, de sorte que les rouleaux (30, 130) reçoivent entre eux dans des cavités (32, 132) les objets entre les films de scellement à chaud (5, 105) en les scellant dans celles-ci;
- un rouleau à doigts (10) disposé sur les bandes transporteuses (3) en amont des rouleaux de scellement à chaud (30, 130) pour positionner les objets, l'axe du rouleau à doigts (10) étant disposé en parallèle par rapport à l'axe des rouleaux de scellement à chaud (30, 130);
caractérisé par les caractéristiques suivantes :
- rouleaux (20, 120) à section transversale polygonale pour l'alimentation forcée, le positionnement et l'isolement géométriques des objets, les rouleaux polygonaux (20, 120) se touchant réciproquement et un d'entre eux étant placé au-dessus et l'autre au-dessous des bandes transporteuses (3) en aval du rouleau à doigts (10) et en amont des rouleaux de scellement à chaud (30, 130) de sorte que les axes de tous les rouleaux (10, 20, 120, 30, 130) se trouvent en parallèle;
- les dispositifs de transport, le rouleau à doigts (10), les rouleaux polygonaux (20, 120) et les rouleaux de scellement à chaud (30, 130) sont disposés en succession de manière à ce que l'alimentation, le positionnement, l'isolement, le scellement et l'évacuation des objets ont lieu le long d'un plan horizontal commun (3).

2. Dispositif selon la revendication 1, caractérisé en ce que la section transversale des rouleaux polygonaux (20, 120) présente substantiellement la forme d'un triangle.

3. Dispositif selon les revendications 1 ou 2, caractérisé en ce que la section transversale des rouleaux polygonaux (20, 120) est arrondie dans les coins (26, 126) et sur les surfaces latérales.

4. Dispositif selon la revendication 1, caractérisé en ce que les rouleaux polygonaux (20, 120) reçoivent sur leurs surfaces extérieures des films de scellement à chaud (5, 105) qui sont amenés par les surfaces extérieures des rouleaux de scellement à chaud (30, 130), et qu'ils dévient les films de scellement à chaud (5, 105) dans la bande transporteuse (3) en direction du transport entre les rouleaux polygonaux (20, 120) et les rouleaux de scellement à chaud (30, 130).

5. Dispositif selon la revendication 4, caractérisé en ce que sur chacun des rouleaux polygonaux (20, 120) au moins deux zones de guidage cylindriques coaxiales (22, 122) sont prévues pour les films de scellement à chaud (5, 105), qui forment des délimitations latérales pour les espaces libre d'objets (24, 124) sur les rouleaux polygonaux (20, 120).

6. Dispositif selon la revendication 5, caractérisé en ce que les zones de guidage du film cylindriques (22, 122) passent dans la zone polygonale par l'intermédiaire de surfaces biseautées ou arrondies.

7. Dispositif selon l'une quelconque des revendications précédentes, caractérisé en ce que le produit est fixé de tous côtés par scellement dans la bande de film, au moyen des rouleaux polygonaux (20, 120).
